# EUROPEAN PATENT SPECIFICATION

(11) **EP 2 765 292 B1**
(45) Date of publication and mention of the grant of the patent: **27.11.2024**
(21) Application number: 14153733.2
(22) Date of filing: 04.02.2014
(51) Int. Cl.: F02D 41/14, F01N 3/20

(54) **Rich burn internal combustion engine catalyst control**
Katalysatorsteuerung für einen Verbrennungsmotor mit fetter Verbrennung
Commande de catalyseur de moteur à combustion interne à mélange riche

(30) Priority: 06.02.2013 US 201313760630
(43) Date of publication of application: 13.08.2014
(73) Proprietor: AI ALPINE US BIDCO INC., Wilmington, Delaware 19801 (US)
(72) Inventor: Wentz, Jared J, Wauwatosa, WI Wisconsin 53222 (US); Zeng, Pin, Vernon Hills, IL Illinois 60061 (US); Rudnitzki, Ryan Michael, Milwaukee, WI Wisconsin 53212 (US)
(74) Representative: Torggler & Hofmann Patentanwälte - Innsbruck

(56) References cited:
- EP-A1- 2 450 760
- EP-A1- 2 599 985
- EP-A2- 0 690 216
- EP-A2- 1 045 124
- EP-B1- 0 814 249
- JP-A- 2002 235 584

## Description

The present disclosure relates to emissions controls for internal combustion engines generally and in particular to methods and systems for catalyst control in rich burn engines.

Known embodiments of the state of the art are disclosed for example by EP 1 045 124 A2, EP 2 599 985 A1 or EP 0 814 249 B1.

Internal combustion engines are ideally operated in a way that the combustion mixture contains air and fuel in the exact relative proportions required for a stoichiometric combustion reaction (i.e., where the fuel is burned completely.) A rich-burn engine may operate with a stoichiometric amount of fuel or a slight excess of fuel, while a lean-burn engine operates with an excess of oxygen (O₂) compared to the amount required for stoichiometric combustion. The operation of an internal combustion engine in lean mode may reduce throttling losses and may take advantage of higher compression ratios thereby providing improvements in performance and efficiency. Rich burn engines have the benefits of being relatively simple, reliable, stable, and adapt well to changing loads. Rich burn engines may also have lower nitrogen oxide emissions, but at the expense of increased emissions of other compounds.

In order to comply with emissions standards, many rich burn internal combustion engines utilize catalysts, such as nonselective catalytic reduction (NSCR) subsystems (known as 3-way catalysts). Catalysts may reduce emissions of nitrogen oxides such as nitric oxide (NO) and nitrogen dioxide (NO₂) (collectively NOx), carbon monoxide (CO), ammonia (NH₃), methane (CH₄), other volatile organic compounds (VOC), and other compounds and emissions components by converting such emissions components to less toxic substances. This conversion is performed in a catalyst component using catalyzed chemical reactions. Catalysts can have high reduction efficiencies and can provide an economical means of meeting emissions standards (often expressed in terms of grams of emissions per brake horsepower hour (g/bhp-hr)).

According to the invention, a system according to claim 1 and a method according to claim 7 are provided in order to achieve low CO emissions levels.

The foregoing summary, as well as the following detailed description, is better understood when read in conjunction with the drawings. For the purpose of illustrating the claimed subject matter, there is shown in the drawings examples that illustrate various embodiments; however, the invention is not limited to the specific systems and methods disclosed.

These and other features, aspects, and advantages of the present subject matter will become better understood when the following detailed description is read with reference to the accompanying drawings, wherein:
- Figure 1: is an exemplary chart illustrating a catalyst operating window and related data.
- Figure 2: is a block diagram of a non-limiting exemplary rich-burn engine and catalyst system.
- Figure 3: is a block diagram of another non-limiting exemplary rich-burn engine and catalyst system.
- Figure 4: is a flowchart of a non-limiting exemplary method of implementing a rich-burn engine and catalyst system according to the present disclosure.
- Figure 5: is an exemplary block diagram representing a general purpose computer system in which aspects of the methods and systems disclosed herein may be incorporated.

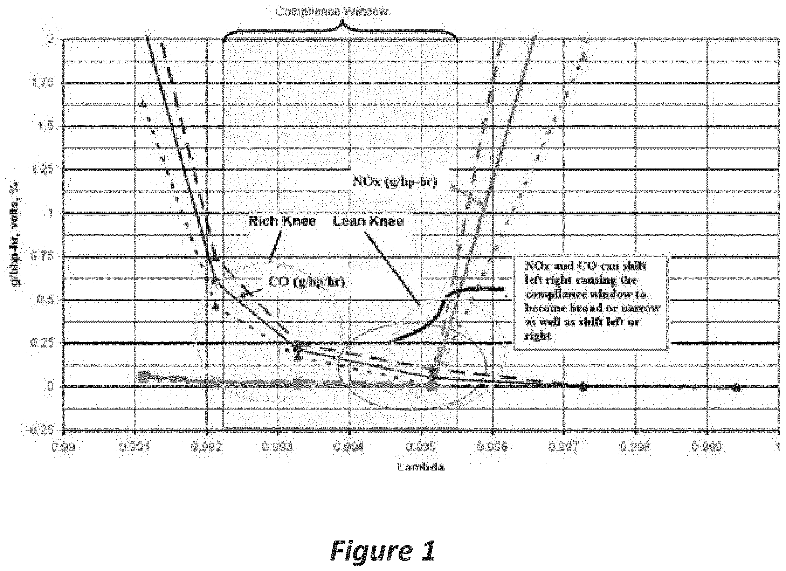

Figure 1 is a chart illustrating example CO and NOx emissions curves relative to lambda (λ). As one skilled in the art will recognize, lambda is the air-fuel equivalence ratio (actual air-fuel ratio / stoichiometric air-fuel ratio). NOx and CO concentrations are not linear, but rather changed dramatically as the "knee" of each of the respective curve representing the concentration of NOx and CO is approached. In this example, as shown in Figure 1, the g/bhp-hr of NOx emitted may increase at a much greater rate as lambda surpasses 0.995 and approaches 0.996, while the g/bhp-hr of CO emitted may increase at a much greater rate as lambda declines below 0994 and retreats towards 0.993. This chart also shows the compliance window, or operating window, in which CO and NOx emissions are below desired levels. The range of lambda in this window is dependent on the current NOx and CO emission levels. However, as conditions change in the engine and/or the environment in which the engine is operating, NOx and CO emissions levels for any particular lambda may change, and therefore the operating window may change in size and location relative to lambda. Thus, as NOx and CO emissions levels change for an engine operating with a particular air-fuel ratio, the air-fuel ratio may need to be adjusted to ensure that the engine maintains low emissions levels. Note that this chart is presented as a demonstrative aide only to illustrate the problem solved by the current disclosure. No limitation on the present subject matter is to be construed from the chart in Figure 1.

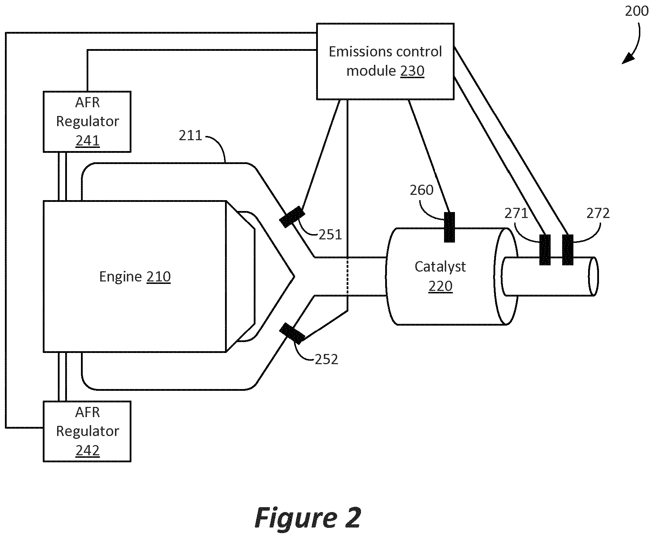

Figure 2 illustrates exemplary system 200, including engine 210 and catalyst 220, that may be implemented according to an embodiment. Note that the entirely of system 200 may also be referred to as an "engine". System 200 is a simplified block diagram that will be used to explain the concepts disclosed herein, and therefore is not to be construed as setting forth any physical requirements or particular configuration required for any embodiment disclosed herein. All components, devices, systems and methods described herein may be implemented with or take any shape, form, type, or number of components, and any combination of any such components that are capable of implementing the disclosed embodiments. All such embodiments are contemplated as within the scope of the present disclosure.

Engine 210 may be any type of internal combustion engine or any device, component, or system that includes an internal combustion component that generates exhaust gases. In an embodiment, engine 210 may be a natural gas fueled internal combustion engine configured to operate with a stoichiometric amount of fuel or a slight excess of fuel in proportion to oxygen (i.e., rich). However, the disclosed embodiments are not limited to such an engine, and may be used with any type of stationary or mobile internal combustion engine. Engine 210 may exhaust gases through exhaust piping 211 into catalyst 220 which then exhausts converted exhaust gases. Catalyst 220 represents one or more catalysts of any type, and any combination of any types of catalysts.

In an embodiment, rather than requiring manual adjustment of the air-fuel mixture to ensure that low emissions are maintained, sensors may be used at various points along the exhaust flow to collect data regarding the content of exhaust gases. The collected data may be provided to emissions control module 230, which may be any type of device, component, computer, or combination thereof, that may be configured to determine an appropriate air-fuel mixture based on the level of one or more compounds in exhaust gases. Emissions control module 230 may, upon determining the optimal air-fuel mixture or an appropriate adjustment in the air-fuel mixture, transmit instructions to or otherwise control air-fuel regulators 241 and 242 so that air-fuel regulators 241 and 242 cause the correct air-fuel mixture to be sent to engine 210. Each of air-fuel regulators 241 and 242 may be a fuel system, carburetor, fuel injector, fuel pass regulator, any system including one or more of these, or any combination thereof.

In an embodiment, system 200 may include pre-catalyst sensors, mid-catalyst sensors, and post-catalyst sensors. In this embodiment, post-catalyst sensor 271 may be an oxygen (e.g., O₂) sensor and post-catalyst sensor 272 may be a NOx sensor. Post-catalyst sensor 272 may also, or instead, be a CO sensor. Post-catalyst sensor 271 may feed data reflecting detected levels of oxygen to emissions control module 230 and post-catalyst sensor 272 may feed data reflecting detected levels of NOx and/or CO to emissions control module 230. Post-catalyst sensors 271 and/or 272 may sense overall catalyst efficiency, but may be relatively slow to report changes in the composition of exhaust gases to emissions control module 230 because it senses the gases only after they have been through the entire catalyst system used by engine 210.

Mid-catalyst sensor 260 may be configured within any one catalyst brick within catalyst 220, or may be any number of sensors configured in any number of catalyst bricks within catalyst 220. Alternatively, mid-catalyst sensor 260 may be configured between two catalyst bricks within catalyst 220, or may configured between two separate catalysts, each of which having one or more catalyst bricks. Note that catalyst 220 represents any number of individual catalysts of any type having any number of catalyst bricks, and mid-catalyst sensor 260 represents any number and type of sensors that may be configured to detect any type of content within a catalyst. All such variations are contemplated as within the scope of the present disclosure. Mid-catalyst sensor 260 may be an oxygen (e.g., O₂) sensor and may provide an indication of the efficiency of catalyst 220, reporting changes in exhaust gases to emissions control module 230 more rapidly than post-catalyst sensors 271 and 271 as mid-catalyst sensor 260 is configured to detect the level of oxygen at catalyst 220. Pre-catalyst sensors 251 and 252 may be oxygen (e.g., O₂) sensors and due to their location may react the fastest among the sensors as they will sense and report to emissions control module 230 the content of exhaust gas as it is emitted from engine 210 and before it travels into catalyst 220.

Using the data received from one or more of post-catalyst sensors 271 and 271, mid-catalyst sensor 260, and pre-catalyst sensors 251 and 252, emissions control module 230 may determine an appropriate air-fuel mixture and transmit data indicating the determined air-fuel mixture or otherwise instruct air-fuel regulators 241 and 242 to operate engine 210 using the determined air-fuel mixture.

In one embodiment, emissions control module 230 may determine an air-fuel mixture set point based on data from pre-catalyst sensors 251 and 252, and then may modify that set point to determine a second set point based on data from mid-catalyst sensor 260. The second set point may then be further modified based on data from post-catalyst sensors 271 and 272.

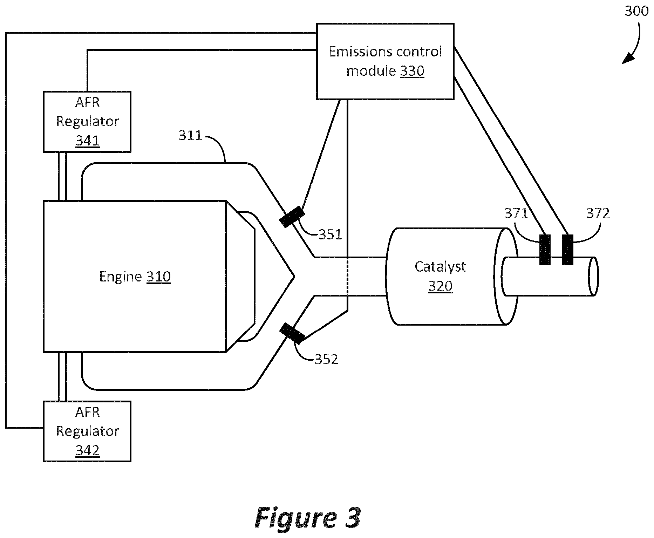

Figure 3 illustrates exemplary system 300, including engine 310 and catalyst 320, that may be implemented according to an embodiment. Note that the entirely of system 300 may also be referred to as an "engine". System 300 is a simplified block diagram that will be used to explain the concepts disclosed herein, and therefore is not to be construed as setting forth any physical requirements or particular configuration required for any embodiment disclosed herein. All components, devices, systems and methods described herein may be implemented with or take any shape, form, type, or number of components, and any combination of any such components that are capable of implementing the disclosed embodiments. All such embodiments are contemplated as within the scope of the present disclosure.

Engine 310 may be any type of internal combustion engine or any device, component, or system that includes an internal combustion component that generates exhaust gases. In an embodiment, engine 310 may be a natural gas fueled internal combustion engine configured to operate with a stoichiometric amount of fuel or a slight excess of fuel in proportion to oxygen (i.e., rich). However, the disclosed embodiments are not limited to such an engine, and may be used with any type of stationary or mobile internal combustion engine. Engine 310 may exhaust gases through exhaust piping 311 into catalyst 320 which then exhausts converted exhaust gases. Catalyst 320 represents one or more catalysts of any type, and any combination of any types of catalysts.

In this embodiment, fewer sensors may be used to accomplish the same goals of automating efficient catalyst control. Specifically, in Figure 3, there is no mid-catalyst sensor. Data collected from post-catalyst sensors 371 and 372 and pre-catalyst sensors 351 and 352 may be provided to emissions control module 330, which may be any type of device, component, computer, or combination thereof, that is configured to determine an appropriate air-fuel mixture based on the level of one or more compounds in exhaust gases. Emissions control module 330 may, upon determining the optimal air-fuel mixture or an appropriate adjustment in the air-fuel mixture, transmit instructions to or otherwise control air-fuel regulators 341 and 342 so that air-fuel regulators 341 and 342 cause the correct air-fuel mixture to be sent to engine 310. Each of air-fuel regulators 341 and3242 may be a fuel system, carburetor, fuel injector, fuel pass regulator, any system including one or more of these, or any combination thereof.

In this embodiment, post-catalyst sensor 371 may be an oxygen (e.g., O₂) sensor and post-catalyst sensor 372 may be a NOx sensor. Post-catalyst sensor 372 may also, or instead, be a CO sensor. Post-catalyst sensor 371 may feed data reflecting detected levels of oxygen to emissions control module 330 and post-catalyst sensor 372 may feed data reflecting detected levels of NOx and/or CO to emissions control module 330. Post-catalyst sensors 371 and/or 372 may sense overall catalyst efficiency, but may be relatively slow to report changes in the composition of exhaust gases to emissions control module 330 because it senses the gases only after they have been through the entire catalyst system used by engine 310. Pre-catalyst sensors 351 and 352 may be oxygen (e.g., O₂) sensors and due to their location may react the fastest among the sensors as they will sense and report to emissions control module 330 the content of exhaust gas as it is emitted from engine 310 and before it travels into catalyst 320.

Using the data received from one or more of post-catalyst sensors 371 and 372 and pre-catalyst sensors 351 and 352, emissions control module 330 may determine an appropriate air-fuel mixture and transmit data indicating the determined air-fuel mixture or otherwise instruct air-fuel regulators 341 and 342 to operate engine 310 using the determined air-fuel mixture.

In one embodiment, emissions control module 330 may determine an air-fuel mixture set point based on data from pre-catalyst sensors 351 and 352, and then may modify that set point to determine a second set point based on data from post-catalyst sensors 371 and 372.

In an embodiment, an initial post-catalyst O₂ set-point level may be determined and loaded into a bias table stored at, or accessible by, emissions control module 330. Based on the bias table, emissions control module 330 may modify the pre-catalyst O₂ air-fuel ratio set-point as the post-catalyst O₂ levels change. In this embodiment, emissions control module 330 may determine the catalyst operating window (an example of which is shown in Figure 1) through a sub-routine and set the determined air-fuel ratio set-point as a zero (0) bias point. Emissions control module 330 may then modify the pre-catalyst O₂ set-point as the post-catalyst O₂ level moves. The post-catalyst NOx sensor may be used in determining the initial set-point and in modifying the post-catalyst O₂ set-point bias table up and down as NOx levels change.

In an embodiment, emissions control module 330 may be configured with a predetermined emissions compliance level and/or catalyst efficiency. In such an embodiment, preconfigured NOx and/or CO grams level may be set and, upon detection of one or both of these levels being approached, met, and/or exceeded, a user may be notified of the out-of-compliance condition and/or a shutdown of the engine may be performed automatically by emissions control module 330. In some embodiments, catalyst efficiency may be based on a determined amount of modification of pre-catalyst O₂ setpoints and/or other conditions, such as engine operating hours and load and monitored environmental conditions.

Any system or engine described herein may be operated to achieve an optimum O₂ set-point for NOx and CO compliance. For example, one or more NOx sensors as described herein may be used to determine a CO concentration that may be represented as an increase in the NOx parts-per-million (ppm) output as the rich knee of the lambda curve (see Figure 1) is approached. The increasing CO concentration when an air-fuel mixture is rich may create stable interference in a NOx sensor, where a NOx reading from such a sensor may indicate a higher level of NOx concentration where actually ammonia is being detected. In a lean air-fuel ratio, such a sensor may read similar levels of NOx as normal. Ammonia created at extremely rich air-fuel ratios may be reported as NOx concentration by a NOx sensor.

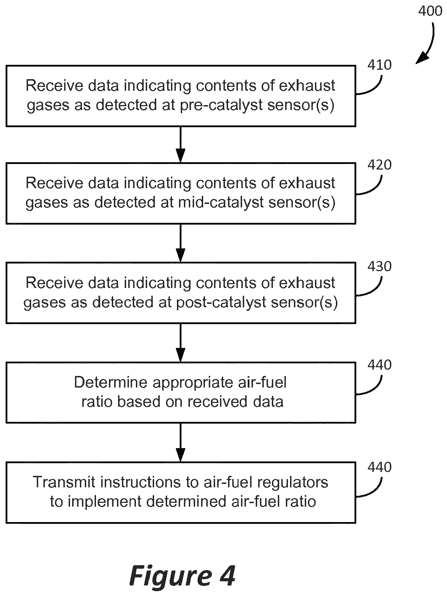

Figure 4 illustrates exemplary, non-limiting method 400 of implementing an embodiment as disclosed herein. Method 400, and the individual actions and functions described in method 400, may be performed by any one or more devices or components, including those described herein, such as the systems illustrated in Figures 1 and 2. In an embodiment, method 400 may be performed by any other devices, components, or combinations thereof, in some embodiments in conjunction with other systems, devices and/or components. Note that any of the functions and/or actions described in regard to any of the blocks of method 400 may be performed in any order, in isolation, with a subset of other functions and/or actions described in regard to any of the other blocks of method 400 or any other method described herein, and in combination with other functions and/or actions, including those described herein and those not set forth herein. All such embodiments are contemplated as within the scope of the present disclosure.

At block 410, data may be received at an emissions control module from one or more pre-catalyst sensors. Such sensors may be oxygen (e.g., O₂) sensors and/or any other type of sensor. At block 420, data may be received at an emissions control module from one or more mid-catalyst sensors. Such sensors may be oxygen (e.g., O₂) sensors and/or any other type of sensor. At block 430, data may be received at an emissions control module from one or more post-catalyst sensors. Such sensors may be oxygen (e.g., O₂) sensors, NOx sensors, CO sensors, and/or any other type of sensor. Note that in an alternate embodiment, no mid-catalyst sensors may be present, and therefore the functions of block 420 may be omitted. It is contemplated that any number of sensors of any type may be used, and such sensors may be located at any location within an engine and catalyst system.

At block 440, an emissions control module may make a determination, based on the data received from one or more sensors, of an appropriate air-fuel ratio. In many embodiments, this determination may be the selection of an air-fuel ratio that maintains or brings the emissions levels of an engine below predetermined levels, such as those mandated by the EPA. At block 440, the emissions control module may instruct or otherwise cause one or more air-fuel regulators to implement the determined air-fuel ratio; i.e., operate the engine using the determined air-fuel ratio.

The technical effect of the systems and methods set forth herein is the ability to more efficiently control the air-fuel mixture used in an engine, and thereby more efficiently ensure that emissions of the engine are kept at desired levels. As will be appreciated by those skilled in the art, the use of the disclosed processes and systems may reduce the emissions of such engines to low levels and maintain those emissions at low levels without requiring manual intervention. Those skilled in the art will recognize that the disclosed systems and methods may be combined with other systems and technologies in order to achieve even greater emissions control and engine performance. All such embodiments are contemplated as within the scope of the present disclosure.

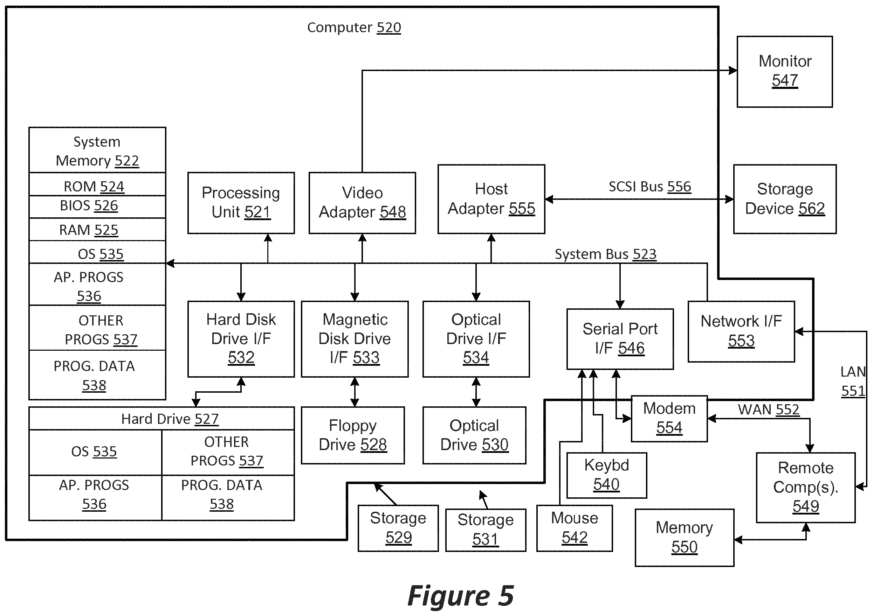

Figure 5 and the following discussion are intended to provide a brief general description of a suitable computing environment in which the methods and systems disclosed herein and/or portions thereof may be implemented. For example, the functions of emissions control modules 230 and 330 may be performed by one or more devices that include some or all of the aspects described in regard to Figure 5. Some or all of the devices described in Figure 5 that may be used to perform functions of the claimed embodiments may be configured in a controller that may be embedded into a system such as those described with regard to Figures 2 and 3. Alternatively, some or all of the devices described in Figure 5 may be included in any device, combination of devices, or any system that performs any aspect of a disclosed embodiment.

Although not required, the methods and systems disclosed herein may be described in the general context of computer-executable instructions, such as program modules, being executed by a computer, such as a client workstation, server or personal computer. Such computer-executable instructions may be stored on any type of computer-readable storage device that is not a transient signal per se. Generally, program modules include routines, programs, objects, components, data structures and the like that perform particular tasks or implement particular abstract data types. Moreover, it should be appreciated that the methods and systems disclosed herein and/or portions thereof may be practiced with other computer system configurations, including hand-held devices, multi-processor systems, microprocessor-based or programmable consumer electronics, network PCs, minicomputers, mainframe computers and the like. The methods and systems disclosed herein may also be practiced in distributed computing environments where tasks are performed by remote processing devices that are linked through a communications network. In a distributed computing environment, program modules may be located in both local and remote memory storage devices.

Figure 5 is a block diagram representing a general purpose computer system in which aspects of the methods and systems disclosed herein and/or portions thereof may be incorporated. As shown, the exemplary general purpose computing system includes computer 520 or the like, including processing unit 521, system memory 522, and system bus 523 that couples various system components including the system memory to processing unit 521. System bus 523 may be any of several types of bus structures including a memory bus or memory controller, a peripheral bus, and a local bus using any of a variety of bus architectures. The system memory may include read-only memory (ROM) 524 and random access memory (RAM) 525. Basic input/output system 526 (BIOS), which may contain the basic routines that help to transfer information between elements within computer 520, such as during start-up, may be stored in ROM 524.

Computer 520 may further include hard disk drive 527 for reading from and writing to a hard disk (not shown), magnetic disk drive 528 for reading from or writing to removable magnetic disk 529, and/or optical disk drive 530 for reading from or writing to removable optical disk 531 such as a CD-ROM or other optical media. Hard disk drive 527, magnetic disk drive 528, and optical disk drive 530 may be connected to system bus 523 by hard disk drive interface 532, magnetic disk drive interface 533, and optical drive interface 534, respectively. The drives and their associated computer-readable media provide non-volatile storage of computer readable instructions, data structures, program modules and other data for computer 520.

Although the exemplary environment described herein employs a hard disk, removable magnetic disk 529, and removable optical disk 531, it should be appreciated that other types of computer readable media that can store data that is accessible by a computer may also be used in the exemplary operating environment. Such other types of media include, but are not limited to, a magnetic cassette, a flash memory card, a digital video or versatile disk, a Bernoulli cartridge, a random access memory (RAM), a read-only memory (ROM), and the like.

A number of program modules may be stored on hard disk drive 527, magnetic disk 529, optical disk 531, ROM 524, and/or RAM 525, including an operating system 535, one or more application programs 536, other program modules 537 and program data 538. A user may enter commands and information into the computer 520 through input devices such as a keyboard 540 and pointing device 542. Other input devices (not shown) may include a microphone, joystick, game pad, satellite disk, scanner, or the like. These and other input devices are often connected to the processing unit 521 through a serial port interface 546 that is coupled to the system bus, but may be connected by other interfaces, such as a parallel port, game port, or universal serial bus (USB). A monitor 547 or other type of display device may also be connected to the system bus 523 via an interface, such as a video adapter 548. In addition to the monitor 547, a computer may include other peripheral output devices (not shown), such as speakers and printers. The exemplary system of Figure 5 may also include host adapter 555, Small Computer System Interface (SCSI) bus 556, and external storage device 562 that may be connected to the SCSI bus 556.

The computer 520 may operate in a networked environment using logical and/or physical connections to one or more remote computers or devices, such as remote computer 549, air-fuel regulators 241, 242, 341, and/or 342. Each of air-fuel regulators 241, 242, 341, and/or 342 may be any device as described herein capable of performing the regulation of air and/or fuel entering an engine. Remote computer 549 may be a personal computer, a server, a router, a network PC, a peer device or other common network node, and may include many or all of the elements described above relative to the computer 520, although only a memory storage device 550 has been illustrated in Figure 5. The logical connections depicted in Figure 5 may include local area network (LAN) 551 and wide area network (WAN) 552. Such networking environments are commonplace in offices, enterprise-wide computer networks, intranets, and the Internet.

When used in a LAN networking environment, computer 520 may be connected to LAN 551 through network interface or adapter 553. When used in a WAN networking environment, computer 520 may include modem 554 or other means for establishing communications over wide area network 552, such as the Internet. Modem 554, which may be internal or external, may be connected to system bus 523 via serial port interface 546. In a networked environment, program modules depicted relative to computer 520, or portions thereof, may be stored in a remote memory storage device. It will be appreciated that the network connections shown are exemplary and other means of establishing a communications link between computers may be used.

Computer 520 may include a variety of computer-readable storage media. Computer-readable storage media can be any available tangible media that can be accessed by computer 520 and includes both volatile and nonvolatile media, removable and non-removable media. By way of example, and not limitation, computer-readable media may comprise computer storage media and communication media. Computer storage media include volatile and nonvolatile, removable and non-removable media implemented in any method or technology for storage of information such as computer readable instructions, data structures, program modules or other data. Computer storage media include, but are not limited to, RAM, ROM, EEPROM, flash memory or other memory technology, CD-ROM, digital versatile disks (DVD) or other optical disk storage, magnetic cassettes, magnetic tape, magnetic disk storage or other magnetic storage devices, or any other tangible medium which can be used to store the desired information and which can be accessed by computer 520. Combinations of any of the above should also be included within the scope of computer-readable media that may be used to store source code for implementing the methods and systems described herein. Any combination of the features or elements disclosed herein may be used in one or more embodiments.

This written description uses examples to disclose the subject matter contained herein, including the best mode, and also to enable any person skilled in the art to practice the invention, including making and using any devices or systems and performing any incorporated methods. The patentable scope of this disclosure is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims.

## Claims

1. A system (200) comprising:
a catalyst (220);
an emission control module (230) configured to determine an air-fuel ratio and to control at least in air-fuel regulation to operate an engine (210) at the air-fuel ratio;
a first oxygen sensor (251) configured to detect oxygen content of gases entering the catalyst (220) and to report the oxygen contents of the gases entering the catalyst (220) to the emissions control module (230);
a second oxygen sensor (271) configured to detect oxygen content of gases exiting the catalyst (220) and to report the oxygen contents of the gases exiting the catalyst (220) to the emissions control module (230);
wherein the emissions control module (230) is configured to determine a first air-fuel ratio based on the contents of the gases entering the catalyst (220) based on the signal from the first oxygen sensor (251); and to determine a second air-fuel ratio by modifying the first air-fuel ratio based on the contents of the gases exiting the catalyst (220) at least based on the signal from the second oxygen sensor (271), and to control an air-fuel regulator (241,242) to operate an engine at the air-fuel ratio using the second air-fuel ratio;
the system being **characterized in that** it further comprises:
a carbon monoxide sensor (272) configured to detect carbon monoxide content of gases exiting the catalyst (220) and to report the carbon monoxide contents of the gases exiting the catalyst (220) to the emissions control module (230);
and that the determination of the second air-fuel ratio is further modifying the first air-fuel ratio based on the signal from the carbon monoxide sensor (272).

2. The system (200) of claim 1 comprising a NOx sensor, and wherein the NOx sensor reports NOx content of the gases exiting the catalyst to the emissions control module (230).

3. The system (200) of any preceding claim, wherein the catalyst (220) is configured in a rich burn engine.

4. The system (200) of any preceding claim, further comprising a third
oxygen sensor (260) configured to detect oxygen content of the gases within the catalyst and to report the oxygen content of the gases to the emissions control module (230).

5. The system (200) of any preceding claim, wherein the air-fuel regulator (241,242) comprises at least one of a fuel system, a fuel valve, a fuel pass regulator, a carburetor, or a fuel injector.

6. , The system (200) of any preceding claim, wherein the emissions control module (230) is further configured to transmit a notification upon determining that the NOx contents of the gases exiting the catalyst (220) indicated by a NOx sensor (272) has met a predetermined NOx threshold or that the carbon monoxide contents of the gases exiting the catalyst (220) indicated by the carbon monoxide sensor (272) has met a predetermined carbon monoxide threshold.

7. A method (400) comprising:
determining (440), at an emissions control module, an air-fuel ratio and control at least in air-fuel regulation (241,242) to operate an engine (210) at the air-fuel ratio;
receiving (410), at the emissions control module (230) from a first oxygen sensor (251), data indicating oxygen contents of gases entering a catalyst (220);
receiving (430), at the emissions control module (230) from a second sensor (271) data indicating oxygen contents of gases exiting the catalyst (220);
determining (440), at the emissions control module, a first air-fuel ratio based on the contents of the gases entering the catalyst (220) based on the data from the first oxygen sensor (251) and determining a second air-fuel ratio by modifying the first air-fuel ratio based on the contents of the gases exiting the catalyst (220) at least based on the signal from the second oxygen sensor (271); and
controlling an air-fuel regulator (241,242) to operate an engine at the air-fuel ratio using the second air-fuel ratio;
**characterized in** by:
receiving, at the emissions control module (230) from a carbon monoxide sensor (272) data indicating carbon monoxide contents of gases exiting the catalyst (220); and
modifying further the first air-fuel ratio by the determination of the second air-fuel ratio based on the data from the carbon monoxide sensor (272).

8. The method of claim 7, further transmitting a notification upon determining that the NOx contents of the gases exiting the catalyst (220) indicated by a NOx sensor (272) has met a predetermined NOx threshold or that the carbon monoxide contents of the gases exiting the catalyst (220) indicated by the carbon monoxide sensor (272) has met a predetermined carbon monoxide threshold.

9. The method (400) of clause 8 or 9, wherein the catalyst (220) is configured in a rich burn engine (210).

## Patentansprüche

1. Ein System (200) umfassend:
- einen Katalysator (220);
- ein Emissionssteuerungsmodul (230), derart konfiguriert, dass es ein Luft-Kraftstoff-Verhältnis bestimmt und wenigstens eine Luft-Kraftstoff-Regelung steuert, um einen Motor (210) mit dem Luft-Kraftstoff-Verhältnis zu betreiben;
- einen ersten Sauerstoffsensor (251), derart konfiguriert, dass er den Sauerstoffgehalt der in den Katalysator (220) eintretenden Gase erfasst und den Sauerstoffgehalt der in den Katalysator (220) eintretenden Gase an das Emissionssteuerungsmodul (230) meldet;
- einen zweiten Sauerstoffsensor (271), derart konfiguriert, dass er den Sauerstoffgehalt der aus dem Katalysator (220) austretenden Gase erfasst und den Sauerstoffgehalt der aus dem Katalysator (220) austretenden Gase an das Emissionssteuerungsmodul (230) meldet;
wobei das Emissionssteuerungsmodul (230) so konfiguriert ist, dass es ein erstes Luft-Kraftstoff-Verhältnis basierend auf dem Gehalt der Gase, die in den Katalysator (220) eintreten, basierend auf dem Signal vom ersten Sauerstoffsensor (251) bestimmt; und dass es ein zweites Luft-Kraftstoff-Verhältnis bestimmt, indem das erste Luft-Kraftstoff-Verhältnis basierend auf dem Gehalt der Gase, die aus dem Katalysator (220) austreten, wenigstens basierend auf dem Signal vom zweiten Sauerstoffsensor (271) modifiziert wird, und dass es einen Luft-Kraftstoff-Regler (241, 242) steuert, um einen Motor mit dem Luft-Kraftstoff-Verhältnis unter Verwendung des zweiten Luft-Kraftstoff-Verhältnisses zu betreiben;
wobei das System **dadurch gekennzeichnet ist, dass** es ferner folgendes umfasst: einen Kohlenmonoxidsensor (272), derart konfiguriert, dass er den Kohlenmonoxidgehalt der aus dem Katalysator (220) austretenden Gase erfasst, und den Kohlenmonoxidgehalt der aus dem Katalysator (220) austretenden Gase an das Emissionssteuerungsmodul (230) meldet;
und dass das Bestimmen des zweiten Luft-Kraftstoff-Verhältnisses ferner das erste Luft-Kraftstoff-Verhältnis basierend auf dem Signal des Kohlenmonoxidsensors (272) modifiziert.

2. Das System (200) nach Anspruch 1 umfassend einen NOx-Sensor, und wobei der NOx-Sensor den NOx-Gehalt der Gase, die aus dem Katalysator austreten, an das Emissionssteuerungsmodul (230) meldet.

3. Das System (200) nach einem der vorhergehenden Ansprüche, wobei der Katalysator (220) in einem Motor mit fetter Verbrennung konfiguriert ist.

4. Das System (200) nach einem der vorhergehenden Ansprüche umfasst ferner einen dritten Sauerstoffsensor (260), derart konfiguriert, dass er den Sauerstoffgehalt der Gase im Inneren des Katalysators erfasst und den Sauerstoffgehalt der Gase an das Emissionssteuerungsmodul (230) meldet.

5. Das System (200) nach einem der vorhergehenden Ansprüche, wobei der Luft-Kraftstoff-Regler (241, 242) mindestens eines der folgenden Elemente umfasst: ein Kraftstoffsystem, ein Kraftstoffventil, einen Kraftstoffdurchlassregler, einen Vergaser oder eine Kraftstoffeinspritzdüse.

6. Das System (200) nach einem der vorhergehenden Ansprüche, wobei das Emissionssteuerungsmodul (230) ferner so konfiguriert ist, dass es eine Benachrichtigung übermittelt, wenn bestimmt wird, dass der NOx-Gehalt der vom Katalysator (220) austretenden Gase, welcher von einem NOx-Sensor (272) angezeigt wird, einen vorbestimmten NOx-Schwellenwert erreicht hat, oder dass der Kohlenmonoxidgehalt der vom Katalysator (220) austretenden Gase, welcher vom Kohlenmonoxidsensor (272) angezeigt wird, einen vorbestimmten Kohlenmonoxid-Schwellenwert erreicht hat.

7. Ein Verfahren (400), umfassend:
- das Bestimmen (440) eines Luft-Kraftstoff-Verhältnisses an einem Emissionssteuerungsmodul und das Steuern wenigstens einer Luft-Kraftstoff-Regelung (241, 242), um einen Motor (210) mit dem Luft-Kraftstoff-Verhältnis zu betreiben;
- das Empfangen (410) von Daten am Emissionssteuerungsmodul (230) von einem ersten Sauerstoffsensor (251), welche den Sauerstoffgehalt von in einen Katalysator (220) eintretenden Gasen anzeigen;
- das Empfangen (430) von Daten am Emissionssteuerungsmodul (230) von einem zweiten Sensor (271), welche den Sauerstoffgehalt der aus dem Katalysator (220) austretenden Gase anzeigen;
- das Bestimmen (440), am Emissionssteuerungsmodul, eines ersten Luft-Kraftstoff-Verhältnisses basierend auf dem Gehalt der Gase, die in den Katalysator (220) eintreten, basierend auf den Daten des ersten Sauerstoffsensors (251), und
- das Bestimmen eines zweiten Luft-Kraftstoff-Verhältnisses durch Modifizieren des ersten Luft-Kraftstoff-Verhältnisses basierend auf dem Gehalt der aus dem Katalysator (220) austretenden Gase, wenigstens basierend auf dem Signal der zweiten Sauerstoffsonde (271); und
- das Steuern eines Luft-Kraftstoff-Reglers (241, 242) mittels des zweiten Luft-Kraftstoff-Verhältnisses zum Betreiben eines Motors mit einem Luft-Kraftstoff-Verhältnis;
**dadurch gekennzeichnet, dass**:
das Empfangen von Daten von einem Kohlenmonoxidsensor (272) am Emissionssteuerungsmodul (230), welche den Kohlenmonoxidgehalt der aus dem Katalysator (220) austretenden Gase anzeigen; und
ferner das Modifizieren des ersten Luft-Kraftstoff-Verhältnisses durch das Bestimmen des zweiten Luft-Kraftstoff-Verhältnisses basierend auf den Daten des Kohlenmonoxidsensors (272).

8. Das Verfahren nach Anspruch 7, welches ferner eine Benachrichtigung übermittelt, wenn festgestellt wird, dass der NOx-Gehalt der aus dem Katalysator (220) austretenden Gase, welcher von einem NOx-Sensor (272) angezeigt wird, einen vorbestimmten NOx-Schwellenwert erreicht hat oder dass der Kohlenmonoxidgehalt der aus dem Katalysator (220) austretenden Gase, welcher von dem Kohlenmonoxidsensor (272) angezeigt wird, einen vorbestimmten Kohlenmonoxid-Schwellenwert erreicht hat.

9. Das Verfahren (400) nach Anspruch 8 oder 9, wobei der Katalysator (220) in einem Motor (210) mit fetter Verbrennung konfiguriert ist.

## Revendications

1. Système (200) comprenant :
- un catalyseur (220) ;
- un module de commande d'émission (230) configuré pour déterminer un rapport air-carburant et pour commander au moins une régulation air entrant-carburant pour faire fonctionner un moteur (210) au rapport air-carburant ;
- un premier capteur d'oxygène (251) configuré pour détecter la teneur en oxygène de gaz entrant dans le catalyseur (220) et pour signaler les teneurs en oxygène des gaz entrant dans le catalyseur (220) au module de commande d'émissions (230) ;
- un deuxième capteur d'oxygène (271) configuré pour détecter la teneur en oxygène de gaz quittant le catalyseur (220) et pour signaler les teneurs en oxygène des gaz quittant le catalyseur (220) au module de commande d'émissions (230) ;
dans lequel le module de commande d'émissions (230) est configuré pour déterminer un premier rapport air-carburant sur la base des teneurs en gaz entrant dans le catalyseur (220) sur la base du signal provenant du premier capteur d'oxygène (251) ; et pour déterminer un deuxième rapport air-carburant par modification du premier rapport air-carburant sur la base des teneurs en gaz quittant le catalyseur (220) au moins sur la base du signal provenant du deuxième capteur d'oxygène (271), et pour commander un régulateur air-carburant (241, 242) pour faire fonctionner un moteur au rapport air-carburant au moyen du deuxième rapport air-carburant ;
le système étant **caractérisé en ce qu'**il comprend en outre :
un capteur de monoxyde de carbone (272) configuré pour détecter la teneur en monoxyde de carbone de gaz quittant le catalyseur (220) et pour signaler les teneurs en monoxyde de carbone des gaz quittant le catalyseur (220) au module de commande d'émissions (230) ;
et que la détermination du deuxième rapport air-carburant modifie en outre le premier rapport air-carburant sur la base du signal provenant du capteur de monoxyde de carbone (272).

2. Système (200) selon la revendication 1 comprenant un capteur de NOx, et dans lequel le capteur de NOx signale la teneur en NOx des gaz quittant le catalyseur au module de commande d'émissions (230).

3. Système (200) selon une quelconque revendication précédente, dans lequel le catalyseur (220) est configuré dans un moteur à combustion riche.

4. Système (200) selon une quelconque revendication précédente, comprenant en outre
un troisième capteur d'oxygène (260) configuré pour détecter la teneur en oxygène des gaz dans le catalyseur et pour signaler la teneur en oxygène des gaz au module de commande d'émissions (230).

5. Système (200) selon une quelconque revendication précédente, dans lequel le régulateur air-carburant (241, 242) comprend au moins un d'un système d'alimentation en carburant, d'une soupape de carburant, d'un régulateur de passage de carburant, d'un carburateur, ou d'un injecteur de carburant.

6. Système (200) selon une quelconque revendication précédente, dans lequel le module de commande d'émissions (230) est en outre configuré pour transmettre une notification lors de la détermination que les teneurs en NOx des gaz quittant le catalyseur (220) indiquées par un capteur de NOx (272) a satisfait à un seuil de NOx prédéterminé ou que les teneurs en monoxyde de carbone des gaz quittant le catalyseur (220) indiquées par le capteur de monoxyde de carbone (272) a satisfait à un seuil de monoxyde de carbone prédéterminé.

7. Procédé (400) comprenant :
- la détermination (440), au niveau d'un module de commande d'émissions, d'un rapport air-carburant et la commande d'au moins la régulation air entrant-carburant (241, 242) pour faire fonctionner un moteur (210) au niveau du rapport air-carburant ;
- la réception (410), au niveau du module de commande d'émissions (230) à partir d'un premier capteur d'oxygène (251), de données indiquant les teneurs en oxygène de gaz entrant dans un catalyseur (220) ;
- la réception (430), au niveau du module de commande d'émissions (230) à partir d'un deuxième capteur (271), de données indiquant les teneurs en oxygène de gaz quittant le catalyseur (220) ;
- la détermination (440), au niveau du module de commande d'émissions, d'un premier rapport air-carburant sur la base des teneurs en gaz entrant dans le catalyseur (220) sur la base des données provenant du premier capteur d'oxygène (251)
- et la détermination d'un deuxième rapport air-carburant par modification du premier rapport air-carburant sur la base des teneurs en gaz quittant le catalyseur (220) au moins sur la base du signal provenant du deuxième capteur d'oxygène (271) ; et
- la commande d'un régulateur air-carburant (241, 242) pour faire fonctionner un moteur au rapport air-carburant au moyen du deuxième rapport air-carburant ;
**caractérisé par** :
la réception, au niveau du module de commande d'émissions (230) à partir d'un capteur de monoxyde de carbone (272), de données indiquant les teneurs en monoxyde de carbone de gaz quittant le catalyseur (220) ; et
en outre la modification du premier rapport air-carburant par la détermination du deuxième rapport air-carburant sur la base de données provenant du capteur de monoxyde de carbone (272).

8. Procédé selon la revendication 7, transmettant en outre une notification lors de la détermination que les teneurs en NOx des gaz quittant le catalyseur (220) indiquées par un capteur de NOx (272) a satisfait à un seuil de NOx prédéterminé ou que les teneurs en monoxyde de carbone des gaz quittant le catalyseur (220) indiquées par le capteur de monoxyde de carbone (272) a satisfait à un seuil de monoxyde de carbone prédéterminé.

9. Procédé (400) selon la clause 8 ou 9, dans lequel le catalyseur (220) est configuré dans un moteur à combustion riche (210).
